# EUROPEAN PATENT APPLICATION

(11) **EP 1 883 237 A1**
(43) Date of publication of application: **30.01.2008**
(21) Application number: 06300839.5
(22) Date of filing: 28.07.2006
(51) Int. Cl.: H04N 7/14

(54) **Methods and devices for mobile video conference calls**

(71) Applicant: MOTOROLA, INC., Schaumburg, IL 60196 (US)
(72) Inventor: Ribeiro Dias, Alexandre, 31400, TOULOUSE (FR); Batut, Eric, 32450, SAINT MARTIN GIMOIS (FR); Elicegui, Lucas, 31500, TOULOUSE (FR)
(74) Representative: Joly, Jean-Jacques

(57) **Abstract**

Disclosed is a mobile communication device and method of a mobile communication device having a clam shell form factor with a video camera on the same surface as the secondary display screen that can be used to carry on video conferencing communication in the closed position. The device can annunciate the receipt of a video conferencing call in a plurality of manners. A video conferencing active mode is initiated either in the open position or the closed position and the secondary display screen is operated to display video conferencing input when the device is in the closed position. The video camera on the exterior surface is operated to generate video conferencing output when the device is in the closed position.

## Description

### FIELD

Disclosed are mobile communication devices and methods of a mobile communication device for video conference communications, and more particularly for video conference communications with a mobile communication device having a clam shell form factor in the closed position.

### BACKGROUND

Manufactures of hand held devices, including those of mobile communication devices, are increasingly adding functionality to their devices. For example, many mobile communication devices shipped today include digital video cameras. Users may capture video images on their wireless communication devices and transmit the image sequence in real-time to a recipient via a network. As cellular networks are providing users with increasing bandwidth, that is, higher data rates, visiophony may be available to more users. Visiophony or video conferencing allows speakers to see and hear each other on their respective screens during a conversation.

Mobile communication devices are offered in many different form factors. The clam shell form factor is popular. In particular, a clam shell form factor device includes two housings joined by a hinge. The clam shell form factor device may have two display screens on opposite sides of a single housing. The primary screen of the clam shell device is on the inside of the device and the secondary screen is on the outside of the device when the device is in the closed position. The secondary screen will typically indicate an incoming call when the device is in a closed position. To accept the call and carry on communication the user can place the device in an open position.

Oftentimes in a clam shell form factor, manufactures include two cameras in the device. One camera may be on the same surface as the secondary display screen that is on the exterior of the device when the device is in the closed position. Another camera for visiophony may be on the same surface as the primary display screen. Therefore, in the open position, one camera directed toward the user is used for visiophony while the other camera is directed away from the user. Two cameras on a single device may add substantial expense to the device.

To reduce the expense of two cameras in a single device, manufacturers incorporate mechanical solutions such as movable hinged cameras and/or display screens to offer visiophony in a clam shell form factor handheld device with a single camera. While a single camera may be preferable in terms of cost, oftentimes mechanical solutions have tolerance problems and can be expensive to manufacture.

### BRIEF DESRIPTION OF THE DRAWINGS

FIG. 1 depicts a clam shell form factor mobile communication device in a closed position according to an embodiment;

FIG. 2 depicts the clam shell form factor mobile communication device in the open position according to an embodiment;

FIG. 3 illustrates the device of FIG. 1 in a closed position in video conference mode according to an embodiment;

FIG. 4 is a flowchart of the operation of the mobile communication device of FIG. 1 according to several embodiments;

FIG. 5 illustrates opening the device to accept a video conference call; and

FIG. 6 illustrates accepting the video conference call while in the closed position.

**DETAILED DESCRIPTION**

It would be beneficial if a mobile communication device having a clam shell form factor with at least a single imager or video camera, such being positioned on the same surface as the secondary display screen could be used to carry on video conferencing communication in the closed position without terminating the call. With a device that can carry on visiophony communication in the closed position, two cameras may not be necessary for the device, thus the disclosed methods and devices can reduce the expense of having two cameras on a device or eliminate the problems associated with a mechanical solution to move either a single camera or a display screen.

Disclosed are methods and mobile communication devices configured for visiophony via the imager fixed in its location on the same surface as the secondary display screen where the imager can point toward the user when the handset is in the closed position, and can point away from the user when the handset is in the open position. Further disclosed are methods and devices to accept a call either in the closed position or in the open position. Then user can then place the device in a closed position and carry on communication.

An embodiment of a method includes receiving an incoming video conference communication and annunciating the incoming video conference communication, and then placing the device in an open position to initiate a video conferencing active mode. The device can then be placed in the closed position so the secondary display screen can display video conferencing communication input and carry on the video conference. In another embodiment, video conferencing is initiated in the closed position by placing a switch for initiating video conferencing active mode to an on position.

The instant disclosure is provided to further explain in an enabling fashion the best modes of making and using various embodiments in accordance with the present invention. The disclosure is further offered to enhance an understanding and appreciation for the invention principles and advantages thereof, rather than to limit in any manner the invention. The invention is defined solely by the appended claims including any amendments of this application and all equivalents of those claims as issued.

It is further understood that the use of relational terms, if any, such as first and second, top and bottom, and the like are used solely to distinguish one from another entity or action without necessarily requiring or implying any actual such relationship or order between such entities or actions. Much of the inventive functionality and many of the inventive principles are best implemented with or in software programs or instructions and integrated circuits (ICs) such as application specific ICs. It is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation. Therefore, in the interest of brevity and minimization of any risk of obscuring the principles and concepts according to the present invention, further discussion of such software and ICs, if any, will be limited to the essentials with respect to the principles and concepts within the preferred embodiments.

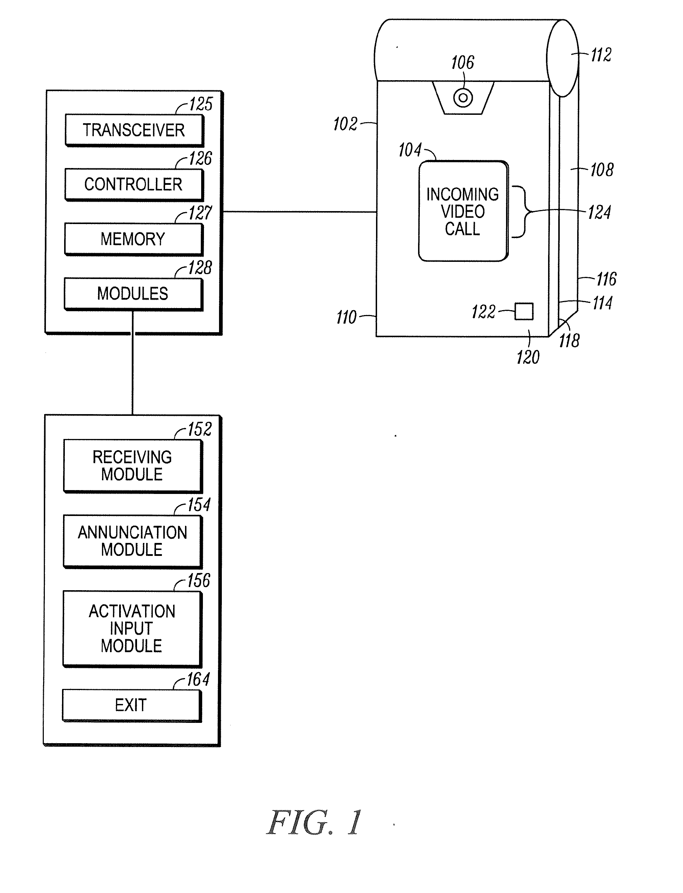

FIG. 1 depicts a clam shell form factor mobile communication device in a closed position according to an embodiment. The mobile communication device 102 may be implemented as a cellular telephone (also called a mobile phone). The mobile communication device 102 represents a wide variety of devices that have been developed for use within various networks. Such handheld communication devices include, for example, cellular telephones, messaging devices, personal digital assistants (PDAs), notebook or laptop computers incorporating communication modems, mobile data terminals, application specific gaming devices, video gaming devices incorporating wireless modems, and the like. Any of these portable devices may be referred to as a mobile station or user equipment. Herein, wireless communication technologies may include, for example, voice communication, the capability of transferring digital data, SMS messaging, Internet access, multi-media content access and/or voice over internet protocol (VoIP).

The secondary display screen 104 and a digital video camera 106 are shown on the same exterior surface. The mobile communication device 102 having a clamshell form factor can have two housings. A first housing 108 is coupled to the second housing 110, for example, by a hinge 112. The two housings are coupled so that in a closed position a first housing 108 has an interior side 114 and an exterior side 116 and a second housing 110 has an interior side 118 and an exterior side 120. The device 102 can have two display screens, a primary display screen positioned on the interior side 118 of the second housing 110, and a secondary display screen 104 on the exterior side 120 of the second housing 110. Oftentimes, the primary and secondary display screens share a backlight assembly. Moreover, the primary and secondary display screens can be the same or similar in size. The device further has a video camera 106 positioned on the exterior side 120 of the second housing 110. Also shown in FIG. 1 is a video conferencing switch or video conference activation key 122 to place the mobile communication device 102 into video conferencing active mode while in the closed position. The video conference activation key or button can be in any position on the device. An incoming video conference call can be indicated by indicia 124 on the secondary display screen 104.

The mobile communication device 102 includes a transceiver 125, a controller 126, memory 127 and modules 128. The modules can include a receiving module 152, an annunciation module 154, an activation input module 156, and an exit module 164. The modules can carry out certain processes of the methods as described herein. The modules can be implemented in software, such as in the form of one or more sets of prestored instructions, and/or hardware, which can facilitate the operation of the mobile station or electronic device as discussed below. The modules may be installed at the factory or can be installed after distribution by, for example, a downloading operation. The operations in accordance with the modules will be discussed in more detail below.

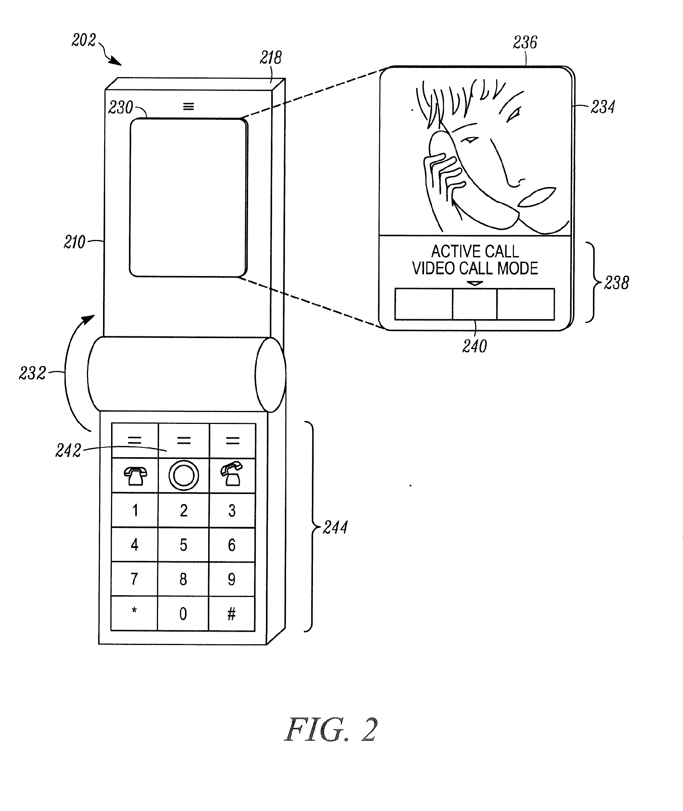

FIG. 2 depicts a clam shell form factor mobile communication device in the open position according to an embodiment. As mentioned above, a primary display screen 230 may be positioned on the interior side 218 of the second housing 210. The arrow 232 indicates the motion of the mobile communication device from a closed position to an open position. As mentioned above, in a clam shell form factor, to accept an incoming call, typically a mobile communication device is placed in an open position, such as that shown.

An embodiment of a method includes receiving an incoming video conference communication and annunciating the incoming video conference communication and then placing the device in an open position to initiate a video conferencing active mode. The device can be then be placed in the closed position to activate the secondary display screen to display video conferencing communication input and carry on the video conference. In another embodiment mentioned above and discussed in more detail below, video conferencing is placed into active mode by placing a switch for initiating video conferencing active mode to an on position while in the closed or open position.

To activate visiophony in one manner, the clam shell form factor telephone is in a closed position as shown in FIG. 1 when the user is notified that there is an incoming video conference call, for example, by a ring tone and/or indicia on the secondary display screen 104 (see FIG. 1). The user can open the device as shown in FIG. 2. Accordingly, the communication is activated when the device is placed in an open position and the calling party 234 can be seen on the primary screen 230 as shown by inset 236 which illustrates an expanded view of the primary display screen 230. Since the digital video camera 106 (see FIG. 1) is located on the same surface as the secondary display screen 104, the calling party cannot see the user. A contextual menu 238 can appear indicating to the user a button 240 to press to switch to video conference call mode. The button may indicate a soft key 242 of the keypad 244 to press to activate the video conference call mode.

The user may then activate the soft key 242, other button or make an audio command and then place the device 202 into a closed position. The video camera 106 (see FIG. 1) then can be automatically activated and the device 202 may then operate in video conference mode. Accordingly, the communication is not terminated when the clam shell form factor mobile communication device has been closed. Moreover, the video content being the calling party can be automatically displayed on the secondary display screen 104 (see FIG. 1).

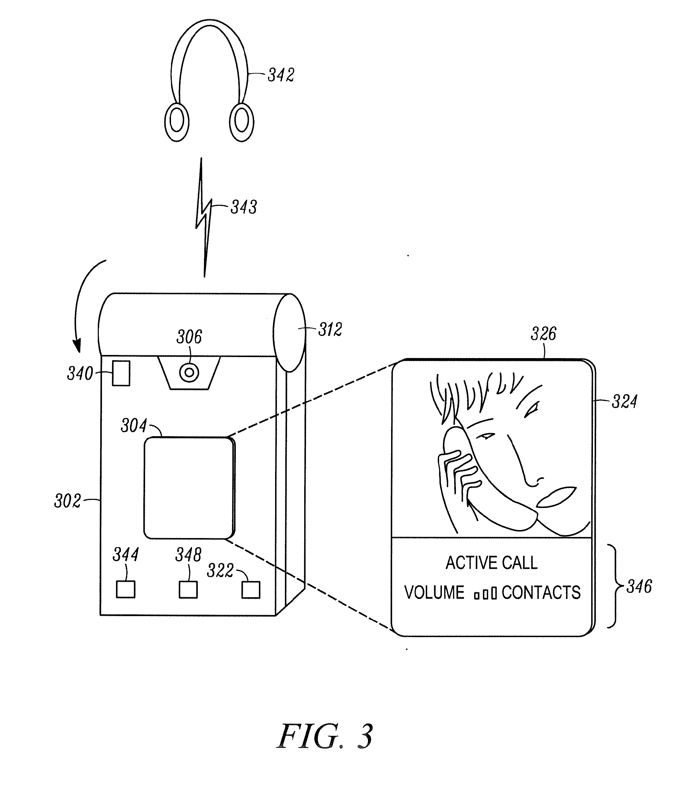

FIG. 3 illustrates the device in a closed position in video conference mode according to an embodiment. An image of the calling party 324 is on the secondary display screen 304 in the expanded view of the inset 324. Video camera 306 generates video conference output. Furthermore, in another embodiment, the hands-free mode may be activated automatically or manually. One or more hands-free speakers 340 can provide audio content of the video conference communication. Alternatively, hands-free headset 342 can provide audio content via a Bluetooth signal 343. Moreover, the hands-free speakers 340 or a hands-free headset 342 can be configured to annunciate the receipt of an incoming video conference communication when the device is either in the open position or the closed position.

The secondary display screen 304 may be configured to display more than one image. In particular, a user may wish to see an image of the other party and an image of himself, herself or some other image or data on the external display. For example, the imager 306 may be pointed in a different direction than at the user, but the display, at an angle, may still be visible to the user. Also, were there to be a multi-party video conference call, the device may use a split screen or inset to show two or more call participants.

In the video conference mode, output keys or buttons 344 can be used to navigate through menus 346 for attributes such as volume, color adjustment and contrast adjustment that can appear on the secondary display 304. For example, if there were more than one calling party in a conference call, output keys or buttons 344 can be used to navigate through calling users. In addition, as previously mentioned, a video conferencing switch or video conference activation key 322 may be used to place the mobile communication device 302 into video conferencing active mode while in the closed position. Moreover, since the device may be in either the closed position or the open position without terminating the communication, a general menu may be accessible on either the secondary display screen in the closed position or the primary display screen in the open position. For example, a general menu item may be to exit the video conference mode. It is understood that the same above described device and method is configured to operate in the same or a similar manner when the user of the device initiates a video conference communication.

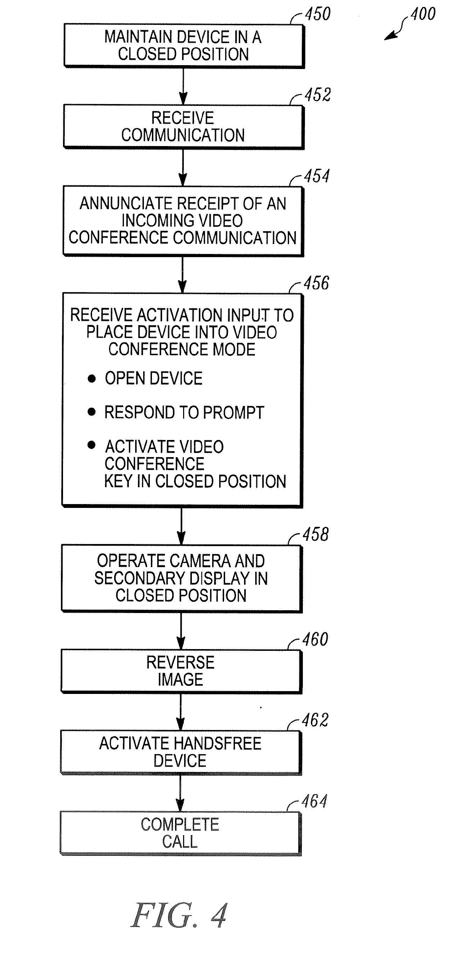

FIG. 4 is a flowchart 400 of the operation according to several embodiments of the above-described device. Since the clamshell device normally is kept in a closed position by the user when the device is in inactive mode, the method described includes initially having the device in a closed position 450. Upon receipt of a video conference call 452, the device can annunciate the incoming communication 454 in a plurality of different manners. As discussed above different manners to annunciate an incoming video conference communication include ringtones and an incoming video call message on the secondary display 124 (see FIG. 1). A receiving module 152 (see FIG. 1) coupled to the controller 126 for receiving the communication via the transceiver 125 and the annunciation module 154 (see FIG. 1) coupled to the controller 126 are configured to receive and annunciate the communication. While annunciated an incoming video conference communication, the device can be in the closed position or the open position.

As discussed above, there is a plurality of manners in which to receive input to place the device into video conference mode 456. To activate the communication, the device can be placed in an open position. The user can respond to a prompt on the primary screen or otherwise to maintain the communication after placing the device in a closed position. The video conference may then be carried on over the secondary display while the device is in a closed position whereas normally, placing the device in a closed position will terminate a communication. An activated video conference communication may be terminated by responding to a prompt to exit video conference mode when the device is either in the closed position or in the open position.

Another manner in which to activate the communication may be to respond to a prompt that is displayed on the secondary display screen without the step of placing the device in an open position. The activation may be effected while the device is in the closed position, for example, by a switch or button, or soft key either in response to a prompt or in response to an annunciation such as a ringtone. An activation input module 156 can be coupled to the controller 126 which further can be coupled to the transceiver 125 to receive input to activate the communication for video conference mode. It is understood that any combination of prompts, buttons, switches, and oral commands may be used to place the device into a video conference active mode while it is in the open or closed position. In a similar manner, navigation through attributes of the active mode may also be performed while the device is in the open or closed position.

The device can therefore be in the closed position 458 while the secondary display screen 104 and the video camera 106 operate. The image taken by the camera can be reversed and/or inverted for transmission to the calling party 460. The image reversal and inversion can be beneficial were a graphic or other orientation dependent image displayed by the called party, so that an appropriately oriented image is transmitted.

One or more speakers 340 (see FIG. 3) may be located on an exterior surface of the device. As the video conference mode is activated on the secondary display 304, also sound can be generated for the communication as well. One or more speakers 340 and a microphone 348 or a hands-free headset 342 for audio input and output may be activated for video conference mode 462.

As mentioned above, a general menu may be accessible on either the secondary display screen in the closed position or the primary display screen in the open position. A general menu item may be to exit the video conference mode 464.

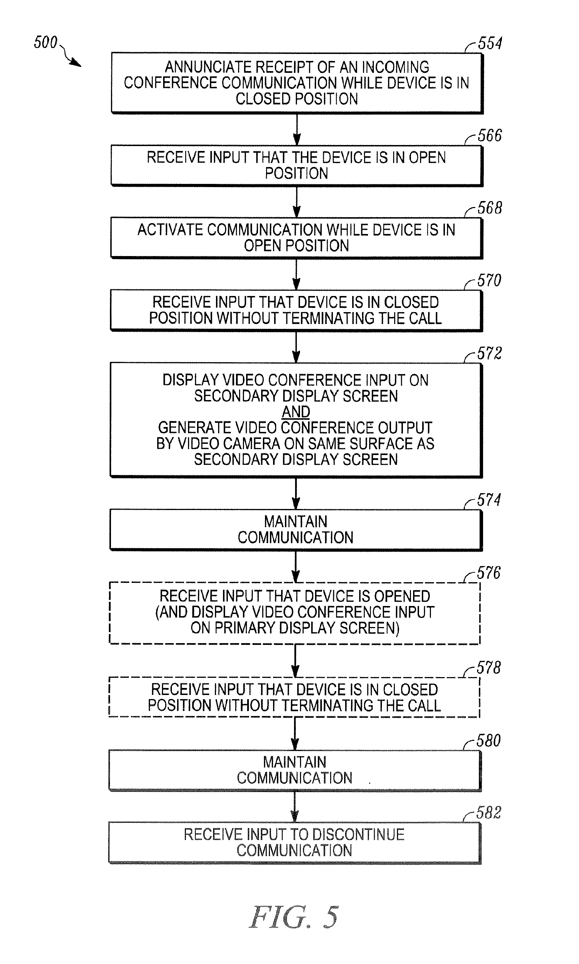

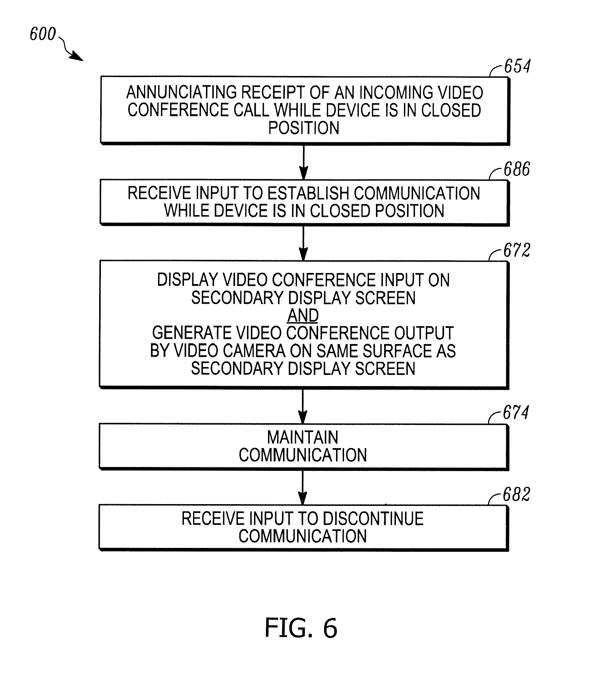

FIGS. 5 and 6 are flowcharts that provide more detail regarding establishing visiophony communication so that it may be carried on while the device is in the closed position. FIG. 5 illustrates opening the device to accept a video conference call. FIG. 6 illustrates accepting the video conference call while in the closed position.

In one embodiment illustrated by the method 500 of FIG. 5, an incoming conference call may be annunciated while the device is in the closed position 554. As discussed above with reference to step 454 (see FIG. 4), a conference call may be annunciated while the device is in either the closed position or the open position. The device can receive input that the device is opened 566 so that it may initiate communication while in the open position 568. The video conference call may be therefore initiated while the device is in the open position. The primary display may display an image of the caller.

So that a user can transmit his or her image to the caller, the user can close the device without terminating the call 570 so that the video camera on the same surface as the secondary display screen may capture the user's image. Accordingly, the device can display video conference call input on the secondary display screen and generate video conference output by the video camera on the same surface as the secondary display screen 572. Video conference communication may be maintained accordingly 574.

In the event that the user has a reason to open the device during the video conference communication, the device may be opened without terminating the call. The video input can include the image of the caller and can be displayed on the primary display screen while the device is in an open position 576. The device may then be closed without terminating the call 578. Again, communication may be maintained while the device is in the closed position 580. In the closed position or the open position, the device can receive input to discontinue the communication 582. It is further understood that according to the device and methods described above, the device can be operated in a manner other than a fully opened or fully closed position for a video conference.

As described above, substantially the same steps as shown in FIG. 5 can apply when the user of the device is the caller placing a video conference call. The device may be opened to place a call and either before or when the call is established, the device can be place into the closed position without terminating the call.

In another embodiment illustrated by the method 600 of FIG. 6, an incoming conference call may be annunciated while the device is in the closed position 654. As discussed above with reference to step 454 (see FIG. 4), a conference call may be annunciated while the device is in either the closed position or the open position. The device can then receive input to establish communication while the device is in the closed position 686. A video conferencing switch or video conference activation key 322 (see FIG. 3) may be used to place the mobile communication device 302 into video conferencing active mode while in the closed position.

In the video conference mode, keys or buttons 344 can be used to navigate through menus 346 for attributes such as volume, color adjustment and contrast adjustment that can appear on the secondary display 304. Additionally, as mentioned above, the user can place a video conference call while the device is in the closed position, buttons 322 or 344, for example by accessing a contact list. Alternatively additional input keys or buttons and/or voice commands can be used. Accordingly, the device can display video conference call input on the secondary display screen and generate video conference output by the video camera on the same surface as the secondary display screen 672. Video conference communication may be maintained accordingly 674. In the closed position or the open position, the device can receive input to discontinue the communication 682.

The above-described methods and devices having a clam shell form factor with at least a single imager or video camera, such being positioned on the same surface as the secondary display screen can be used to carry on video conferencing communication in the closed position without terminating the call. With a device that can carry on visiophony communication in the closed position, two cameras may not be necessary for the device, thus the disclosed methods and devices can reduce the expense of having two cameras on a device or eliminate the problems associated with a mechanical solution to move either a single camera or a display screen.

This disclosure is intended to explain how to fashion and use various embodiments in accordance with the technology rather than to limit the true, intended, and fair scope and spirit thereof. The foregoing description is not intended to be exhaustive or to be limited to the precise forms disclosed. Modifications or variations are possible in light of the above teachings. The embodiment(s) was chosen and described to provide the best illustration of the principle of the described technology and its practical application, and to enable one of ordinary skill in the art to utilize the technology in various embodiments and with various modifications as are suited to the particular use contemplated. All such modifications and variations are within the scope of the invention as determined by the appended claims, as may be amended during the pendency of this application for patent, and all equivalents thereof, when interpreted in accordance with the breadth to which they are fairly, legally and equitable entitled.

## Claims

1. A mobile communication device having a clamshell form factor, comprising:
a transceiver configured to receive an incoming video conference communication;
a controller coupled to the transceiver configured to process the incoming video conference communication and to process video conferencing active mode;
a first housing;
a second housing, wherein the first housing is coupled to the second housing so that the first housing and the second housing together have a clamshell form factor such that in a closed position, the first housing has an interior side and an exterior side and the second housing has an interior side and an exterior side;
a primary display screen positioned on the interior side of the first housing of the device in the closed position; and
a secondary display screen positioned on the exterior side of the first housing of the device in a closed position and wherein the secondary display screen is configured to operate in video conferencing active mode when the device is in the closed position.

2. The device of Claim 1, wherein the controller is configured to initiate the video conferencing active mode when the device is placed in an open position.

3. The device of Claim 1, wherein the primary display screen is configured to display a prompt to annunciate the receipt of an incoming video conference communication when the device is in the open position and wherein the secondary display screen is configured to display a prompt to annunciate the receipt of an incoming video conference communication when the device is in the closed position.

4. The device of Claim 3, wherein a video conference activation key is positioned on the first housing or the second housing.

5. The device of Claim 1, wherein the controller is configured to maintain video conferencing active mode when the device is in a closed and open position.

6. The device of Claim 1, further comprising:
hands-free speakers or a hands-free headset that are coupled to the controller and are configured to be activated when the device is in a closed position and is in video conferencing active mode.

7. The device of Claim 1, further comprising:
hands-free speakers or a hands-free headset that are coupled to the controller and are configured to annunciate the receipt of an incoming video conference communication when the device is either in the open position or the closed position.

8. The device of Claim 1, further comprising:
a video camera positioned on the exterior side of the first housing that is configured to be operational when the device is in the closed position and in video conferencing active mode.

9. The device of Claim 1, wherein the primary display screen and the secondary display screen are substantially the same size.

10. A method of a mobile communication device having a clamshell form factor having two housings coupled so that in a closed position a first housing has an interior side and an exterior side and a second housing has an interior side and an exterior side, the device further having two display screens, a primary display screen positioned on the interior side of the first housing, a secondary display screen on the exterior side of the first housing, and wherein the device further has a video camera positioned on the exterior side of the second housing, the method comprising:
initiating a video conferencing active mode;
operating the secondary display screen to display video conferencing input when the device is in the closed position; and
operating the video camera to generate video conferencing output when the device is in the closed position.

11. The method of Claim 10, further comprising:
annunciating the receipt of an incoming video conference communication.

12. The method of Claim 10, further comprising:
maintaining video conferencing active mode when the device is in the closed position.

13. The method of Claim 10, wherein initiating a video conference active mode comprises:
placing the device in an open position; and
activating video conferencing by placing the device in the open position.

14. The method of Claim 13, further comprising:
displaying a prompt on the primary display screen to place the device in video conferencing active mode when the device is in an open position.

15. The method of Claim 14, further comprising:
receiving a response to the prompt to place the device in video conferencing active mode.

16. The method of Claim 10, wherein initiating a video conferencing active mode comprises:
initiating video conferencing active mode by placing a switch for initiating video conferencing active mode to an on position

17. A method of a mobile communication device having a clamshell form factor having two housings coupled so that in a closed position a first housing has an interior side and an exterior side and a second housing has an interior side and an exterior side, the device further having two display screens, a primary display screen positioned on the interior side of the first housing, a secondary display screen on the exterior side of the first housing, the method comprising:
receiving an incoming video conference communication;
annunciating the incoming video conference communication;
placing the device in an open position to initiate a video conferencing active mode; and
placing the device in the closed position to activate the secondary display screen to display video conferencing communication input.

18. The method of Claim 17, further comprising:
maintaining video conferencing active mode when the device is in the closed position.

19. The method of Claim 17, wherein the device further has a video camera positioned on the exterior side of the first housing, the method further comprising:
operating the video camera in video conferencing active mode.

20. The method of Claim 17, further comprising:
reversing and inverting the camera image when in video conferencing active mode in the closed position.
